# EUROPEAN PATENT SPECIFICATION

(11) **EP 3 084 929 B1**
(45) Date of publication and mention of the grant of the patent: **28.04.2021**
(21) Application number: 14872313.3
(22) Date of filing: 18.12.2014
(51) Int. Cl.: H02K 3/04, H01F 27/28, H01F 41/06, H02K 3/24, H02K 15/04, H02K 21/12, H02K 1/14, H02K 1/20

(54) **STATOR FOR AN ELECTRIC MACHINE**
STATOR FÜR EINE ELEKTRISCHE MASCHINE
STATOR POUR UNE MACHINE ÉLECTRIQUE

(30) Priority: 20.12.2013 SE 1351569
(43) Date of publication of application: 26.10.2016
(73) Proprietor: Swedish PowerTrain Techcenter AB, 289 71 Sibbhult (SE)
(72) Inventor: GÖRANSSON, Anders, SE-281 46 Tormestorp (SE)
(74) Representative: Kransell & Wennborg KB
(86) International application number: PCT/SE2014/051526
(87) International publication number: WO 2015/094103

(56) References cited:
- WO-A1-88/08636
- WO-A1-2013/189602
- DE-A1- 4 427 323
- JP-A- 2004 297 987
- US-A- 4 398 112
- US-A1- 2011 309 698
- US-A1- 2012 112 600
- US-B1- 6 768 239
- US-B1- 6 768 239

## Description

### Field of the Invention

The present invention relates to the field of electric machines, and more specifically to a stator for an electric machine, wherein the stator comprises a plurality of radially distributed metal sheet winding turns, forming the stator coil. Although the stator is mainly described in relation to an electric machine, it can also be used in other applications, such as e.g. electromagnetic flywheel applications. The present invention also relates to an electric machine comprising the stator as well as a method for assembly of the stator.

### Background of the Invention

Electric machines are used in a wide variety of applications due to, for example, their capability of being provided in different sizes and also to the fact that they have high energy conversion efficiency, thus being environmentally friendly which has been an increasing demand lately. Typical applications are, for example, industrial fans, machine tools, household appliances, blowers and pumps, various uses in automotive hybrid drive trans, etc.

Typically, the electric machines comprise a moving part, the rotor, and a stationary part, the stator. Electromagnetic fields are formed in the rotor as well as in the stator, and the product between these electromagnetic fields gives rise to a force enabling for a relative rotational motion between the stator and the rotor. The stator is built up by winding coil of e.g. cupper or aluminum which are wrapped around respective magnetic stator cores for forming magnetic poles when being energized. The stator can be provided with a different number of magnetic stator cores having various sizes depending on its specific application. The relative motion between the stator and the rotor, during use, gives rise to energy in the form of heat in e.g. the winding coil of the stator. More specifically, the winding coil of the stator is heated up during use and it is necessary to provide cooling to the winding coil in order to minimize the risk of reducing the overall efficiency of the electric machine.

A problem with prior art stators is that it is difficult to provide sufficient cooling to the winding coil, especially when there are a plurality of turns in the winding coil, since the cooling medium may only be able to reach the outer most winding turns. Hereby, only the outer layers of the windings are provided with sufficient cooling. The inner winding turns have no direct contact with the stator cooling medium.

US 2013/0200734 provide an attempt to increase the cooling effect to the windings of a stator component. In US 2013/0200734, the stator core comprises a plurality of axially adjacent stacks of laminations. The laminations are spaced apart from each other in the axial direction by means of spacer means. Hereby, a cooling medium is able to flow between the laminations to increase the cooling of the stator.

Although US 2013/0200734 increase the cooling effect of the stator, it is still in need of further cooling improvements.

According to further prior art, JP 2004-297987 relates to a stator having refrigerant passage arranged in a space between a respective first and second wire coil, which first and second wire coil are each wounded around a respective teeth part of a split core. US 6,768,239 relates to multiple phase winding for an electromotive device comprised of individual phase windings. US 2012/112600 relates to a stator which includes a stator core and a multi-phase stator coil distributedly wound on the stator core. US 2011/309698 relates to an electric motor assembly including a stator having a stator core and windings around the stator core.

### Summary of the Invention

It is thus an object of the present invention to at least provide a stator for an electric machine having improved cooling functionalities in comparison to prior art solutions. It is also an object of the present invention to provide an electric machine with a stator having improved cooling characteristics

The invention is defined in independent claims 1 and 9, preferred embodiments are disclosed in the dependent claims.

According to a first aspect of the present invention there is provided a stator for an electric machine, the stator comprising a plurality of radially distributed metal sheet winding turns extending in an axial and a circumferential direction of the stator, for housing a rotor component therein; wherein the metal sheet winding turns are radially spaced apart from each other, such that cooling passages are provided between the metal sheet winding turns.

The wording "metal sheet winding turns" should, in the following and throughout the entire description, be interpreted as two or more layers in the radial direction of the stator, forming the winding coil of the stator. The winding turns may be composed of a single sheet of metal which has been winded-up around an axial centre geometric axis of the stator to form the plurality of winding turns. The winding turns may of course be separately arranged such that each winding turn is formed of a respective separate sheet of metal. Other alternatives are of course conceivable, such as e.g. one sheet of metal is forming a first plurality of distributed metal sheet winding turns, and another sheet of metal in circumferential connection with the first plurality of metal sheet winding turns is forming a second plurality of distributed metal sheet winding turns.

The present invention is based on the insight that by using a plurality of spaced apart metal sheet winding turns instead of conventional copper wire according to prior art solutions, the cooling effects of the stator can be increased, since the present invention enables for sufficient and relatively equal cooling of the whole radial direction of the stator.

An advantage of the present invention is hence that the cooling effects of the stator is increased in comparison to the use of conventional copper wire coils, which will only receive cooling on an outer surface formed by the most outer positioned winding turns in cases of a plurality of winding layers. Furthermore, the present invention is simple and easy to produce since there is no need of using e.g. copper windings to form the coil which is time consuming and less cost efficient. Accordingly, the metal sheet winding turns according to the present invention are hence configured to fulfill the functionalities of the copper wires in prior art solutions. Still further, since the cooling effects are increased in relation to regular stator components, the stator according to the present invention may be particularly suitable for electromagnetic flywheel applications, where cooling efficiency is one of the major parameters limiting the amount of energy that can be stored in such devices.

Furthermore, due to the positive cooling effects of the present invention, the stator may be able to provide a maximum power distribution during a longer duration in relation to prior art solutions, thus giving rise to more energy dense electric motor solutions.

The metal sheet winding turns may be provided from different kind of materials, such as cupper or aluminum. Other materials are of course conceivable and known to the person skilled in the art.

According to an example embodiment, each one of the plurality of radially distributed metal sheet winding turns may be provided with insulating means, the insulating means being provided on at least a portion of a first surface of the respective metal sheet winding turns.

Hereby, the insulating means may contribute to provide an even distribution of the cooling passages between the metal sheet winding turns. Accordingly, the metal sheet winding turns may be arranged with a predetermined distance in relation to each other by means of the insulating means. The insulating means may be an electrical insulating means which provides further functionalities to the stator since it reduces the risk of electrical currents short-circuiting the stator. The insulating means may also be an adhesive layer of any suitable kind which acts as a mechanical insulation providing a distance between the metal sheet winding turns. Accordingly, by providing an insulating means the predictability of the size of the cooling passages is increased.

The insulating means may be positioned on various positions on the metal sheet winding turns. For example, the insulating means may be arranged on one side, or on both sides of each of the metal sheet winding turns. The insulating layers may be lumped or provided as a continuous layer on the respective metal sheet winding turns, etc.

According to the invention, the radially distributed metal sheet winding turns is arranged in a respective continuous S-shaped configuration in the circumferential direction of the stator, such that the stator is alternatingly provided with portions of metal sheets and openings when following the circumferential direction of the stator.

Hereby, electric current will flow along the S-shaped configuration of the metal sheet winding turns. The openings for each one of the metal sheet winding turns may be of various sizes such that the openings, when assembled in a plurality of metal sheet winding turns, have an increasing size in the radial direction of the stator. The openings may of course be of equal size, or approximately equal size, for all of the plurality of metal sheet winding turns. For example, if each metal sheet winding turn comprises six openings, each of the six openings is of equal size. If the stator comprises e.g. ten layers of metal sheet winding turns, then each winding turn may have six openings of individually equal size but different in size in comparison to the openings of the other one of the ten metal sheet winding turns, thus forming an opening having a varying size in the radial direction of the stator.

The stator further comprises at least one metal block, the metal block having a first portion positioned in one of the openings of the radially distributed metal sheet winding turns.

Hereby, when electrical current is provided in the S-shaped configuration of the metal sheet winding turns, i.e. following the S-shape, the metal block will be magnetized by the plurality of metal sheet winding turns. It will be the axial passage of the plurality of metal sheet winding turns that will give rise to the magnetization of the metal block while the circumferential passage acts mainly as a connecting distance for arriving at the next axial passage. Accordingly, it may be beneficial to increase the axial passages of the S-shaped configuration while minimizing the circumferential passage. Also, since the plurality of metal sheet winding turns are arranged in the above described S-shape, the metal block will either act as a north magnetic pole or a south magnetic pole, depending on its position in the S-shape.

According to an example, the metal blocks may be provided from various examples of magnetically conductive materials, such as ferromagnetic material, soft magnetic composites, etc.

According to an example embodiment, the first portion of the at least one metal block may be formed in a dovetail shape having, in an assembled configuration, a gradually increasing width in the radially increasing direction of the stator.

An advantage is that the when the metal block is magnetized, the dovetail shape, in conjunction with the above described shape of the openings in the plurality of distributed metal sheet winding turns, prevents the metal block from being pulled towards a centre portion of the stator. Accordingly, it may be beneficial to arrange the openings in the plurality of metal sheet winding turns in a corresponding dovetail shape.

The stator further comprises a ring portion enclosing the plurality of radially distributed metal sheet winding turns.

An advantage is that the ring portion supports the dove tail shaped metal blocks, thereby reducing the need of external fastening means such as screws or bolts, etc.

The metal ring may be composed of a plurality of laminated metal sheet layers or may be provided from sintered metal powder forming a solid metal ring.

The ring portion further comprises circumferentially distributed recesses in the radial and axial direction of the ring portion for housing a second portion of the at least one metal block. According to an example embodiment, the circumferentially distributed recesses of the ring portion and the second portion of the metal block may be formed in a dovetail shape.

Hereby, the metal block may be fixated to the ring portion. This provides for increased stability of the stator and the dovetail configuration of the circumferentially distributed recesses of the ring portion further prevents the metal blocks from being pulled towards the centre of the stator when the metal sheet winding turns are provided with electrical current and the metal blocks are being magnetized. Having a dovetail shape of the ring portion may further increase the design options of the first portion of the metal block since the radial displacement towards the centre will be prevented by the ring portion.

According to an example embodiment, the stator may further comprise a first end disc positioned at a first axial end portion of the metal sheet winding turns, the first end disc comprising a circumferentially extending recess on a first side of the first end disc facing the metal sheet winding turns; wherein the recess is configured to receive a cooling medium and to guide the cooling medium through the cooling passages.

Hereby, cooling medium, such as e.g. air, can be provided to the circumferential recess and directed through each of the passages formed between the pluralities of radially distributed metal sheet winding turns.

According to an example embodiment, the stator may further comprise a second end disc; the second end disc corresponds in shape to the first end disc and is positioned on an axially opposite second axial end portion of the metal sheet winding turns in comparison to the first end disc.

An advantage is that a corresponding circumferentially extending recess of the second end disc may receive the cooing medium provided through the passages formed by the plurality of metal sheet winding turns, and direct that cooling medium to e.g. the environment, or to a pick-up tray or the like.

According to a second aspect of the present invention, there is provided an electric machine, comprising a rotor for rotation around an axial geometrical axis of rotation; and a stator according to any one of the above described embodiments of the first aspect of the present invention.

The electric machine may be an electric motor configured to generate mechanical energy by means of the electrically driven motor, or the electric machine may be a generator configured to generate electrical energy by means of mechanical motion exerted on the electric machine.

According to an example embodiment, the stator may be a first stator; wherein the electric machine further comprises at least a second stator axially interconnected to the first stator and rotated in relation to the first stator around a geometric axis extending in the axial direction of the electric machine.

An advantage with an electric machine having a stator according to the present invention is, at least, that an electric machine can be provided with more than one electric phase, which electric machine is easier to assemble in comparison to prior art solutions. According to the present invention, the above described stator can be axially connected to a further similar stator and rotated in relation to the other stator. Hereby, a two-phase electric machine is provided. According to prior art solutions on the other hand, connecting two stators to provide a two-phase electric machine will require winding of coil wires between the two stators, which is much more complex than the present invention. In case of adding a further stator to provide a three-phase engine, the winding of coil wires will be even further complex. Hereby, the radial size of the electric machine according to prior art solutions will increase in dependence of the number of phases added since there must be provided more windings of coil wire to interconnect the different phases to each other, while the electric machine according to the present invention will have the same, or approximately the same, radial size independently of the number of phases added.

Effects and features of this second aspect are largely analogous to those described above in relation to the description of the first aspect of the present invention.

According to a third aspect of the present invention, there is provided a method for assembling a stator of an electric machine, comprising the steps of winding an S-shaped metal sheet around a geometric centre axis for forming circumferential arranged metal sheet winding turns having alternatingly arranged openings on a first and a second axial end portion thereof; positioning a metal block in each of the alternatingly arranged openings of the first axial end portion of the winded metal sheet winding turns; positioning a metal block in each of the alternatingly arranged openings of the second axial end portion of the winded metal sheet winding turns; positioning the first axial end portion of the winded metal sheet winding turns in a circumferentially arranged recess of a first end disc; and positioning the second axial end portion of the winded metal sheet winding turns in a circumferentially arranged recess of a second end disc.

Hereby, an efficient, simple and relatively cost efficient method for assembling the inventive stator is provided. The assembly method may be executed manually by an operator or by means of preprogrammed robots or the like such that an increased production rate per time unit is provided. It should be readily understood that the described method steps does not have to be performed in the above described consecutive order.

According to an example embodiment, the step of positioning the metal block in each of the alternatingly arranged openings of the first axial end portion of the winded metal sheet winding turns may be preceded by the step of positioning the second axial end portion of the winded metal sheet winding turns in the circumferentially arranged recess of the second end disc.

According to an example embodiment, the step of positioning the metal block in each of the alternatingly arranged openings of the second axial end portion of the winded metal sheet winding turns may be preceded by the steps of positioning the first axial end portion of the winded metal sheet winding turns in the circumferentially arranged recess of the first end disc; and removing the second end disc from the second axial end portion of the winded metal sheet winding turns.

Hereby, the method steps may be executed in a specific order or may be executed independently of each other.

Further effects and features of this third aspect of the present invention are largely analogous to those described above in relation to the first aspect of the present invention.

### Brief Description of the Drawings

The above, as well as additional objects, features and advantages of the present invention, will be better understood through the following illustrative and non-limiting detailed description of exemplary embodiments of the present invention, wherein:
Fig. 1 is a perspective view of an example embodiment of the stator according to the present invention;
Fig. 2 is a perspective view of the metal sheet winding turns according to an embodiment of the present invention;
Fig. 3 is an exploded perspective view of the stator in Fig. 1 connected to an end disc provided with a circumferentially arranged recess;
Fig. 4 is an exploded perspective view of an example embodiment of a three-phase engine having a stator according to the present invention;
Fig. 5 is an exploded perspective view illustrating an assembly method of the stator according to an example embodiment; and
Fig. 6 is a flow chart illustrating the exemplified assembly method depicted in Fig. 5.

### Detailed Description of Exemplary Embodiments of the Invention

The present invention will now be described more fully hereinafter with reference to the accompanying drawings, in which exemplary embodiments of the invention are shown. The invention may, however, be embodied in many different forms and should not be construed as limited to the embodiment set forth herein; rather, these embodiments are provided for thoroughness and completeness. Like reference character refer to like elements throughout the description.

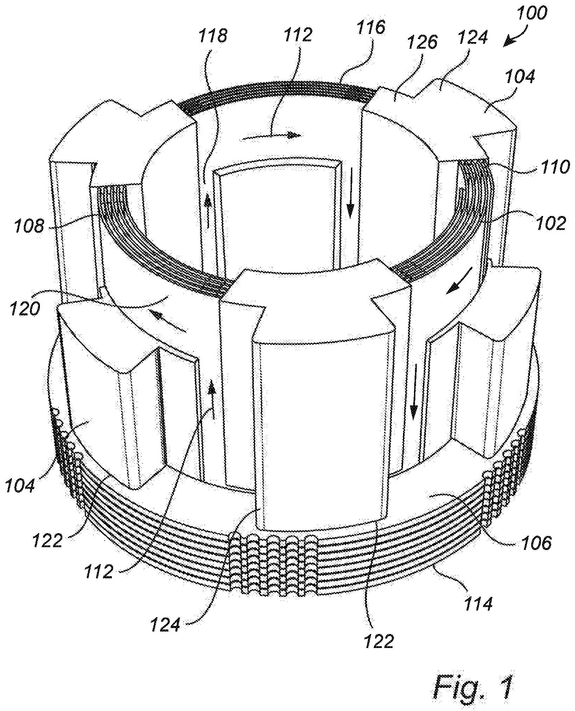

Reference is now made to Fig. 1, which illustrates an example embodiment of a stator 100 according to the present invention. The stator 100 in Fig. 1 comprises a plurality of radially distributed metal sheet winding turns 102; six equally distributed metal blocks in the circumferential direction of the stator, each metal block is denoted as 104; and a ring portion 106 enclosing the radially distributed metal sheet winding turns 102 and the metal blocks 104.

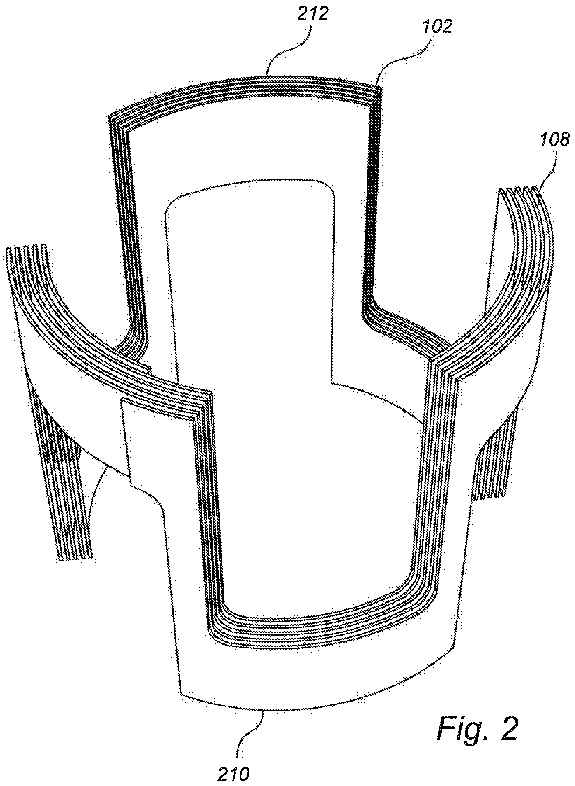

The plurality of radially distributed metal sheet winding turns 102 is depicted in detail in Fig. 2 and according to this example embodiment, the metal sheet winding turns 102 are made from a single sheet which is wounded around a centre geometric axis. The sheet is made in an S-shaped configuration and in the example embodiment there are six openings in the circumferential direction of the stator, three openings from a first axial end 114 of the stator and three openings from a second axial end 116 of the stator. The first 114 and second 116 axial ends should be construed as arranged on opposite axial ends of the stator 100. The metal blocks are positioned in the openings as will be described further below. Accordingly, since the metal sheet is wounded up around the centre geometric axis, the wording "plurality of radially distributed metal sheet winding turns 102" should hence be seen in the radial direction of the stator, i.e. there is a plurality of layers as seen in the radial direction of the assembled stator 100.

Since the metal sheet is wounded, the metal winding turns 102 are slightly spaced-apart from each other in the radial direction of the stator 100. Hereby, natural passages for cooling medium are provided. Accordingly, air or other suitable cooling medium can be transferred axially through the cooling passages 108 between each of the metal sheet winding turns 102. Also, since there will be provided cooling passages 108 between each pair of metal sheet, there will be a relatively equal cooling for the respective metal sheet winding turns independently of its radial position. Hence, the inner metal sheet winding turn directed towards the centre of the stator 100 will be provided with substantially equal amount of cooling as the oppositely positioned outer metal sheet winding turn. Furthermore, in order to control the size of the cooling passages 108, insulating means 110 in the form of an adhesive sheet, adhesive tape or the like can be fixated to the metal sheet winding turns 102 prior to assembly.

As described above, the plurality of metal sheet winding turns 102 are arranged in an S-shaped configuration. The openings of the S-shape are arranged in such a way as to radially increase in size. Hereby, the openings form a dovetail shape into which the metal blocks can be positioned.

The S-shaped configuration is hence formed by axially extending portions 118 and circumferentially extending portions 120, where two axially extending portions 118 in conjunction with a circumferentially extending portion 120 forms the above described opening into which the metal block may be positioned. It should be understood from the present invention that the axially extending portions 118 and the circumferentially extending portions 120 may vary in size and are not restricted to the illustrations given in Fig. 1. For example, the axially extending portions 118 may be larger in size, while the circumferentially extending portions 120 may be smaller in size, thereby reducing the width and increasing the axial distance of the openings into which the metal blocks 104 are positioned.

The metal blocks 104, being six to the number in the example depicted in Fig. 1, are configured to provide a magnetic field when the metal sheet winding turns 102 are provided with an electrical current from an external power source (not shown). The functionality of the stator will be described further below. Although six metal blocks is provided in the example embodiment depicted in Fig. 1, it should be readily understood that the present invention works equally well with more or less than six metal blocks, which merely serves the purpose of an example.

The metal blocks 104 are preferably made from a magnetically conductive material and have a dovetail shape such that a first portion 126 of the metal blocks 104 can be fitted into the openings of the plurality of radially distributed metal sheet winding turns 102. An advantage is that when electrical current is provided to the plurality of radially distributed metal sheet winding turns 102, the metal blocks 104 are prevented from being pulled towards the centre of the stator 100.

When electric current is provided to the plurality of metal sheet winding turns 102, the current will flow in the direction of the S-shaped configuration as is illustrated by the arrows 112. Hereby, when the electrical current is flowing in the metal sheet winding turns 102, the metal blocks 104 will be magnetized. The three metal blocks inserted from the first axial end 114 of the stator 100 will act as north magnetic pole, while the three metal blocks inserted from the second axial end 116 of the stator 100 will act as south magnetic pole. It is the direction of the electrical current that is decisive in deciding which of the blocks that will act as north or south magnetic poles.

Hereby, a stator is provided which, together with a suitable rotor (not shown) can work as an electric machine, either in the form of an electric motor or in the form of a generator.

As described above, the stator 100 depicted in Fig. 1 also comprises a ring portion 106 enclosing the radially distributed metal sheet winding turns 102 and the metal blocks 104. The ring portion 106 is in the example of Fig. 1 made of metal sheets which are laminated. The ring portion 106 serves the purpose of being an outer support for the plurality of metal sheet winding turns 102 and the metal blocks 104. The ring portion 106 comprises a plurality of circumferentially distributed recesses 122 in the form of a dovetail shape corresponding to a dovetail shape of a second portion 124 of the respective metal blocks 104.

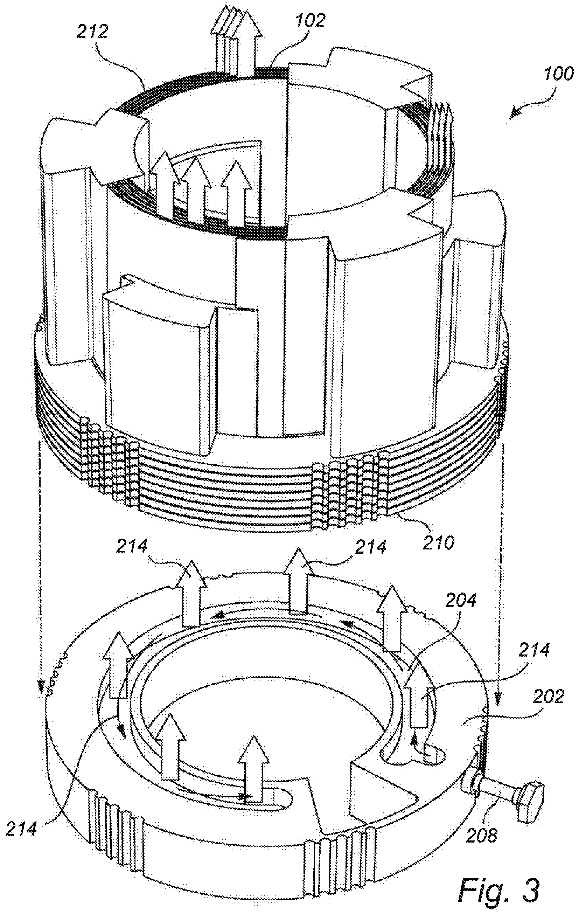

Turning now to Fig. 3, which is a perspective view of the stator in Fig. 1 connected to an end disc 202. The end disc 202 is provided with a circumferentially arranged recess 204 on a first side thereof facing the metal sheet winding turns 102 when being assembled.

As can be seen, the circumferentially arranged recess 204 is in communication with a cooling medium intake 208. Hereby, cooling medium, such as e.g. air, oil, or other suitable medium, is provided into the intake 208 and further through the recess 204. As described, the plurality of metal sheet winding turns 102 is positioned in the recess 204. More precisely, a first axial end portion 210 of the metal sheet winding turns 102 are positioned in the recess 204. Hereby, during use of the stator, cooling medium is provided to the intake 208. The cooling medium is further directed to the recess 204 and thereafter axially through each of the cooling passages 108 and out on a second axial end portion 212 of the metal sheet winding turns 102. The distribution of the cooling medium is indicated by the arrows 214. A similar second end disc may be arranged at the second axial end portion 212 of the metal sheet winding turns 102 such that the second axial end portion 212 of the metal sheet winding turns 102 are positioned in a corresponding recess of the second end disc, where the recess is in communication with an outlet for cooling medium, which cooling medium has been heated during its transport through the metal sheet winding turns, can be expelled.

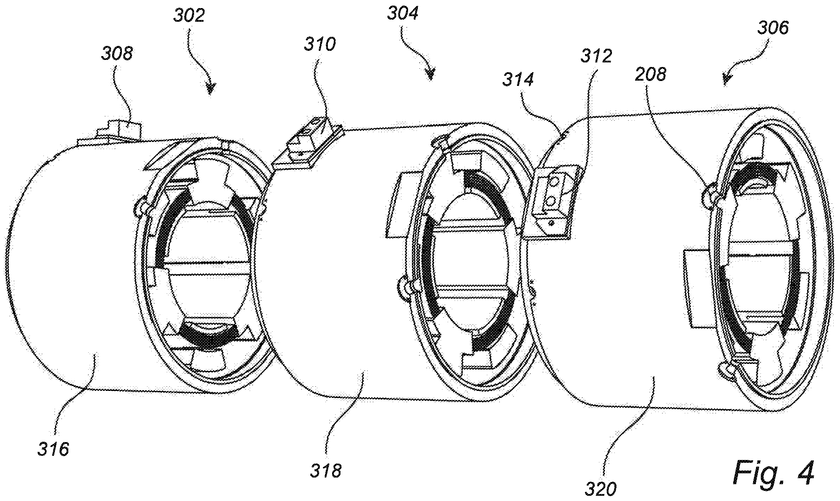

As briefly described above, the stator 100 according to the present invention can, when arranged with a suitable rotor housed by the stator, form an electric machine. Fig. 4 is an exploded perspective view of an example embodiment of a three-phase engine having a stator according to the present invention. The three-phase engine in Fig. 4 is constituted by a first 302, second 304 and third 306 electric machine. More precisely, the above described stator is arranged in a respective stator housing 316, 318, 320 to form the respective electric machine 302, 304, 306 when a first, second and third rotor (not shown) is enclosed by the respective stator. The electric machine may also comprise a single rotor housed by each of the stators forming the electric machine. Although the electric machine in Fig. 4 comprises three electric machines to form a three-phase engine, the invention is also applicable by interconnecting even further electric machines to each other to form e.g. a four phase engine, a five phase engine, etc. Hence, the three-phase engine in Fig. 4 is merely for illustrative purposes. Interconnection of two electric machines to form a two-phase engine is hence also possible by means of the present invention.

The first electric machine 302 is rotated in comparison to the second electric machine 304, which in turn is rotated in relation to the third electric machine 306. This is clearly illustrated in Fig. 4 by the electrical connections 308, 310, 312 which are arranged at different circumferential positions in relation to each other. According to an example, the first electric machine 302 is rotated 40 degrees in relation to the second electric machine 304, which in turn is rotated 40 degrees in relation to the third electric machine 306. Other degrees of rotation are of course conceivable and known to the skilled person. Furthermore, each of the electrical engines 302, 304, 306 comprises a cooling medium intake 208 and a cooling medium outlet 314 as described above.

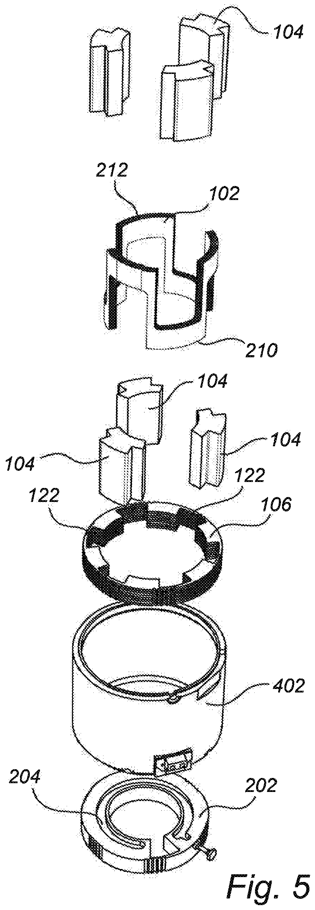

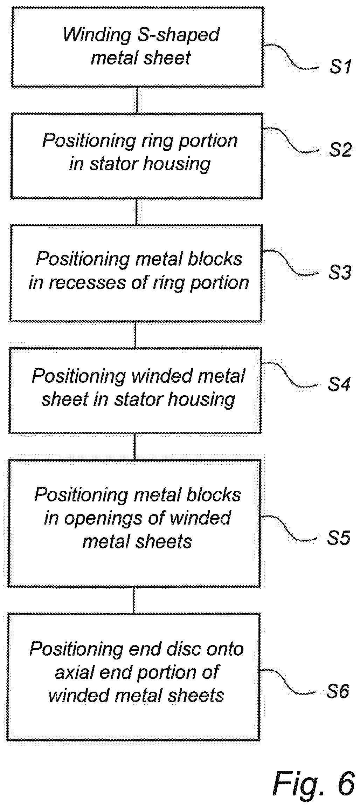

Reference is now made to Fig. 5, in combination with Fig. 6, which illustrates an assembly method of the stator according to an example embodiment.

According to the depicted example embodiment, the stator is assembled by first winding S1 the S-shaped metal sheet around a geometric centre axis (not shown). Hereby, the above described circumferentially arranged metal sheet winding turns having alternatingly arranged openings are provided.

Thereafter, the ring portion 106 is positioned S2 in a stator housing 402. Hereby, the ring portion 106 may be sufficiently connected to the stator housing 402. As a subsequent step, three metal blocks 104 are positioned S3 in the circumferentially distributed recesses 122 of the ring portion 106.

The winded metal sheet winding turns 102 are thereafter positioned S4 in the stator housing 402. More particularly, the openings of the first axial end portion 210 of the metal sheet winding turns 102 are positioned in the metal blocks 104 for fixation of the metal sheet winding turns 102. Subsequently, the remaining metal blocks 104 are positioned S5 in the openings of the second axial end portion 212 of the winded metal sheet winding turns 102.

Finally, the first end disc 202 is positioned S6 onto the second axial end portion of the winded metal sheet winding turns 102 such that the second end portion 212 is positioned in the recess 204 of the first end disc 202. As a further step, a second end disc may be positioned such that the first end portion of the winded metal sheet winding turns 102 is positioned in the recess of the second end disc. This step may be executed either as a final step or, for example, as a step between the step of positioning S3 the metal blocks in the circumferentially distributed recesses 122 of the ring portion 106 and the step of positioning S4 the winded metal sheet winding turns 102 in the stator housing.

According to another example embodiment of the assembly method of the stator, the above described first step S1 is initially provided. Thereafter, the second axial end portion 212 of the winded metal sheet winding turns 102 are positioned in the circumferential recess of the second end disc. This step is followed by the step of positioning a metal block 104 in each of the alternatingly arranged openings of the first axial end portion 210 of the winded metal sheet winding turns 102. The recess 204 of the first end disc 202 is thereafter positioned such that the first axial end portion 210 of the winded metal sheet winding turns are arranged in the recess 204. Now, the remaining metal blocks are provided to the stator arrangement. This is executed by temporarily removing the second end disc 212 from the second axial end portion of the winded metal sheet winding turns and position the remaining metal blocks 104 in the openings of the second axial end portion 212. Thereafter the second end disc is again positioned such that the second axial end portion 212 of the winded metal sheet winding turns are positioned in the recess of the second end disc. Also, the ring portion is naturally provided to the stator arrangement and positioned thereto at a desired stage of the assembly method. The assembled stator can thereafter be positioned in the previously described stator housing.

The above description of the example embodiments of the present invention and the accompanying drawings are to be regarded as non-limiting example of the invention and the scope of protection is defined by the appended claims. Any reference sign in the claims should not be construed as limiting the scope.

## Claims

1. A stator (100) for an electric machine, said stator comprising a plurality of radially distributed metal sheet winding turns (102) extending in an axial and a circumferential direction of the stator, for housing a rotor component therein; wherein said metal sheet winding turns (102) are radially spaced apart from each other, such that cooling passages (108) are provided between the metal sheet winding turns (102), **characterized in that** the radially distributed metal sheet winding turns (102) are arranged in a respective continuous S-shaped configuration in the circumferential direction of the stator (100), such that the stator is alternatingly provided with portions of metal sheets and openings when following the circumferential direction of the stator (100), the stator further comprising at least one metal block (104), said metal block (104) having a first portion (126) positioned in one of the openings of the radially distributed metal sheet winding turns (102), and a ring portion (106) enclosing said plurality of radially distributed metal sheet winding turns (102), wherein said ring portion (106) further comprises circumferentially distributed recesses (122) in the radial and axial direction of the ring portion for housing a second portion (124) of said at least one metal block (104).

2. The stator (100) according to claim 1, wherein each one of the plurality of radially distributed metal sheet winding turns (102) is provided with insulating means (110), said insulating means (110) being provided on at least a portion of a first surface of the respective metal sheet winding turns.

3. The stator (100) according to any one of claims 1 or 2, wherein said first portion (126) of the at least one metal block (104) is formed in a dovetail shape having, in an assembled configuration, a gradually increasing width in the radially increasing direction of said stator.

4. The stator (100) according to any one of the preceding claims, wherein said circumferentially distributed recesses (122) of the ring portion (106) and said second portion (124) of the metal block (104) are formed in a dovetail shape.

5. The stator (100) according to any one of the preceding claims, further comprising a first end disc (202) positioned at a first axial end portion (210) of the metal sheet winding turns (102), said first end disc (202) comprising a circumferentially extending recess (204) on a first side of the first end disc (202) facing the metal sheet winding turns (102); wherein said recess (204) is configured to receive a cooling medium and to guide said cooling medium through the cooling passages (108).

6. The stator (100) according to claim 5, further comprising a second end disc, said second end disc corresponds in shape to said first end disc (202) and is positioned on an axially opposite second axial end portion (212) of said metal sheet winding turns (102) in comparison to said first end disc.

7. An electric machine (302, 304, 306), comprising a rotor for rotation around an axial geometrical axis of rotation; and a stator (100) according to any one of the preceding claims.

8. The electric machine (302, 304, 306) according to claim 7, wherein the stator (100) is a first stator; wherein the electric machine further comprises at least a second stator axially interconnected to said first stator and rotated in relation to said first stator around a geometric axis extending in the axial direction of said electric machine.

9. A method for assembling a stator (100) of an electric machine, comprising the steps of:
- winding (S1) an S-shaped metal sheet around a geometric centre axis for forming circumferential arranged metal sheet winding turns (102) having alternatingly arranged openings on a first (210) and a second (212) axial end portion thereof;
- positioning a metal block (104) in each of the alternatingly arranged openings of the first axial end portion (210) of the winded metal sheet winding turns (102);
- positioning a metal block (104) in each of the alternatingly arranged openings of the second axial end portion (212) of the winded metal sheet winding turns (102);
- positioning the metal blocks (104) in a respective circumferentially distributed recess of a ring portion (106);
- positioning the first axial end portion (210) of the winded metal sheet winding turns (102) in a circumferentially arranged recess (204) of a first end disc (202); and
- positioning the second axial end portion (212) of the winded metal sheet winding turns (102) in a circumferentially arranged recess of a second end disc.

10. The method according to claim 9, wherein the step of positioning the metal block (104) in each of the alternatingly arranged openings of the first axial end portion (210) of the winded metal sheet winding turns (102) is preceded by the step of:
- positioning the second axial end portion (212) of the winded metal sheet winding turns (102) in said circumferentially arranged recess of the second end disc.

11. The method according to claims 10, wherein the step of positioning the metal block (104) in each of the alternatingly arranged openings of the second axial end portion (212) of the winded metal sheet winding turns (102) is preceded by the steps of:
- positioning the first axial end portion (210) of the winded metal sheet winding turns (102) in said circumferentially arranged recess (204) of the first end disc (202); and
- removing said second end disc from said second axial end portion (212) of the winded metal sheet winding turns (102).

## Patentansprüche

1. Stator (100) für eine elektrische Maschine, wobei der Stator mehrere radial verteilte Metallblech-Gewindewindungen (102) umfasst, die sich in einer axialen und einer umlaufenden Richtung des Stators erstrecken, um darin ein Rotorbauteil unterzubringen; wobei die Metallblech-Gewindewindungen (102) derart radial voneinander beabstandet sind, dass zwischen den Metallblech-Gewindewindungen (102) Kühldurchgänge (108) bereitgestellt sind, **dadurch gekennzeichnet, dass** die radial verteilten Metallblech-Gewindewindungen (102) in einer jeweiligen kontinuierlichen S-förmigen Ausgestaltung in der umlaufenden Richtung des Stators (100) derart angeordnet sind, dass der Stator abwechselnd mit Abschnitten aus Metallblechen und Öffnungen bereitgestellt ist, wenn sie der umlaufenden Richtung des Stators (100) folgen, wobei der Stator wenigstens einen Metallblock (104) umfasst, wobei der Metallblock (104) einen ersten Abschnitt (126) aufweist, der in einer der Öffnungen der radial verteilten Metallblech-Gewindewindungen (102) angeordnet ist, und einen Ringabschnitt (106), der die mehreren radial verteilten Metallblech-Gewindewindungen (102) einschließt, wobei der Ringabschnitt (106) weiterhin umlaufend verteilte Vertiefungen (122) in der radialen und axialen Richtung des Ringabschnitts aufweist, um einen zweiten Abschnitt (124) des wenigstens einen Metallblocks (104) unterzubringen.

2. Stator (100) nach Anspruch 1, wobei jede der mehreren radial verteilten Metallblech-Gewindewindungen (102) mit Isolationsmitteln (110) bereitgestellt ist, wobei die Isolationsmittel (110) auf wenigstens einem Abschnitt einer ersten Fläche der jeweiligen Metallblech-Gewindewindungen bereitgestellt sind.

3. Stator (100) nach irgendeinem der Ansprüche 1 oder 2, wobei der erste Abschnitt (126) des wenigstens einen Metallblocks (104) in einer Schwalbenschwanz-Form geformt ist, die in einer zusammengesetzten Ausgestaltung eine abgestuft ansteigende Breite in der radial ansteigenden Richtung des Stators aufweist.

4. Stator (100) nach irgendeinem der voranstehenden Ansprüche, wobei die umlaufend verteilten Vertiefungen (122) des Ringabschnitts (106) und der zweite Abschnitt (124) des Metallblocks (104) in einer Schwalbenschwanz-Form geformt sind.

5. Stator (100) nach irgendeinem der voranstehenden Ansprüche, weiterhin umfassend eine erste Endscheibe (202), die an einem ersten axialen Endabschnitt (210) der Metallblech-Gewindewindungen (102) angeordnet sind, wobei die erste Endscheibe (202) eine sich umlaufend erstreckende Vertiefung (204) auf einer ersten Seite der ersten Endscheibe (202) gegenüber der Metallblech-Gewindewindungen (102) umfasst; wobei die Vertiefung (204) ausgestaltet ist, um ein Kühlmedium aufzunehmen und das Kühlmedium durch die Kühldurchgänge (108) zu führen.

6. Stator (100) nach Anspruch 5, weiterhin umfassend eine zweite Endscheibe, wobei die zweite Endscheibe in der Form der genannten ersten Endscheibe (202) entspricht und im Vergleich zu der ersten Endscheibe auf einem axial entgegengesetzten zweiten axialen Endabschnitt (212) der Metallblech-Gewindewindungen (102) angeordnet ist.

7. Elektrische Maschine (302, 304, 306), umfassend einen Rotor zur Rotation um eine axiale geometrische Rotationsachse; und einen Stator (100) nach irgendeinem der voranstehenden Ansprüche.

8. Elektrische Maschine (302, 304, 306) nach Anspruch 7, wobei der Stator (100) ein erster Stator ist; wobei die elektrische Maschine weiterhin wenigstens einen zweiten Stator umfasst, der axial mit dem ersten Stator zusammengeschaltet und in Bezug auf den ersten Stator um eine geometrische Achse rotiert ist, die sich in der axialen Richtung der elektrischen Maschine erstreckt.

9. Verfahren zum Zusammenbauen eines Stators (100) einer elektrischen Maschine, umfassend die Schritte:
- Wickeln (S1) eines S-förmigen Metallblechs um eine geometrische Mittelachsel zum Formen von umlaufendend angeordneten Metallblech-Gewindewindungen (102), die abwechselnd angeordnete Öffnungen auf einem ersten (210) und einem zweiten (212) axialen Endabschnitt davon aufweisen;
- Anordnen eines Metallblocks (104) in jeder der abwechselnd angeordneten Öffnungen des ersten axialen Endabschnitts (210) der gewickelten Metallblech-Gewindewindungen (102);
- Anordnen eines Metallblocks (104) in jeder der abwechselnd angeordneten Öffnungen des zweiten axialen Endabschnitts (212) der gewickelten Metallblech-Gewindewindungen (102);
- Anordnen der Metallblöcke (104) in einer jeweiligen umlaufend verteilten Vertiefung eines Ringabschnitts (106);
- Anordnen des ersten axialen Endabschnitts (210) der gewickelten Metallblech-Gewindewindungen (102) in einer umlaufend angeordneten Vertiefung (204) einer ersten Endscheibe (202); und
- Anordnen des zweiten axialen Endabschnitts (212) der gewickelten Metallblech-Gewindewindungen (102) in einer umlaufend angeordneten Vertiefung einer zweiten Endscheibe.

10. Verfahren nach Anspruch 9, wobei dem Anordnungsschritt des Metallblocks (104) in jeder der abwechselnd angeordneten Öffnungen des ersten axialen Endabschnitts (210) der gewickelten Metallblech-Gewindewindungen (102) der Schritt vorausgeht des:
- Anordnens des zweiten axialen Endabschnitts (212) der gewickelten Metallblech-Gewindewindungen (102) in der umlaufend angeordneten Vertiefung der zweiten Endscheibe.

11. Verfahren nach Anspruch 10, wobei dem Anordnungsschritt des Metallblocks (104) in jeder der abwechselnd angeordneten Öffnungen des zweiten axialen Endabschnitts (212) der gewickelten Metallblech-Gewindewindungen (102) die Schritte vorausgehen des:
- Anordnens des ersten axialen Endabschnitts (210) der gewickelten Metallblech-Gewindewindungen (102) in der umlaufend angeordneten Vertiefung (204) der ersten Endscheibe (202); und
- Entfernens der zweiten Endscheibe von dem zweiten axialen Endabschnitt (212) der gewickelten Metallblech-Gewindewindungen (102).

## Revendications

1. Stator (100) pour une machine électrique, ledit stator comprenant une pluralité de tours d'enroulement de feuille métallique distribués radialement (102) qui s'étend dans une direction axiale et une direction circonférentielle du stator, pour y loger un composant de rotor ; dans lequel lesdits tours d'enroulement de feuille métallique (102) sont espacés radialement, de telle sorte que des passages de refroidissement (108) sont pourvus entre les tours d'enroulement de feuille métallique (102),
**caractérisé en ce que** les tours d'enroulement de feuille métallique distribués radialement (102) sont agencés selon une configuration en forme de S continue respective en direction circonférentielle du stator (100), de telle sorte que le stator est pourvu de manière alternée de portions de feuilles métalliques et d'ouvertures en suivant la direction circonférentielle du stator (100), le stator comprenant en outre au moins un bloc métallique (104), ledit bloc métallique (104) ayant une première portion (126) positionnée dans une des ouvertures des tours d'enroulement de feuille métallique distribués radialement (102), et une portion d'anneau (106) entourant ladite pluralité de tours d'enroulement de feuille métallique distribués radialement (102), dans lequel ladite portion d'anneau (106) comprend en outre des encoches distribuées circonférentiellement (122) en direction radiale et en direction axiale de la portion d'anneau pour loger une deuxième portion (124) dudit au moins un bloc métallique (104).

2. Stator (100) selon la revendication 1, dans lequel chaque tour de la pluralité de tours d'enroulement de feuille métallique distribués radialement (102) est pourvu d'un moyen d'isolation (110), ledit moyen d'isolation (110) étant pourvu sur au moins une portion d'une première surface des tours d'enroulement de feuille métallique respectifs.

3. Stator (100) selon l'une quelconque des revendications 1 et 2, dans lequel ladite première portion (126) dudit au moins un bloc métallique (104) est conformée comme une queue d'aronde ayant, en configuration assemblée, une largeur augmentant graduellement en direction radialement croissante dudit stator.

4. Stator (100) selon l'une quelconque des revendications précédentes, dans lequel lesdites encoches distribuées circonférentiellement (122) de la portion d'anneau (106) et de ladite deuxième portion (124) du bloc métallique (104) sont conformées en queue d'aronde.

5. Stator (100) selon l'une quelconque des revendications précédentes, comprenant en outre un premier disque terminal (202) positionné à une première portion terminale axiale (210) des tours d'enroulement de feuille métallique (102), ledit premier disque terminal (202) comprenant une encoche qui s'étend circonférentiellement (204) sur un premier côté du premier disque terminal (202) qui fait face aux tours d'enroulement de feuille métallique (102) ;
dans lequel ladite encoche (204) est configurée pour recevoir un fluide de refroidissement et pour guider ledit fluide de refroidissement à travers les passages de refroidissement (108).

6. Stator (100) selon la revendication 5, comprenant en outre un deuxième disque terminal, ledit deuxième disque terminal ayant une forme qui correspond audit premier disque terminal (202) et étant positionné sur une deuxième portion terminale axiale (212) axialement opposée desdits tours d'enroulement de feuille métallique (102) par rapport audit premier disque terminal.

7. Machine électrique (302, 304, 306) comprenant un rotor destiné à tourner autour d'un axe de rotation géométriquement axial ; et un stator (100) selon l'une quelconque des revendications précédentes.

8. Machine électrique (302, 304, 306) selon la revendication 7, dans laquelle le stator (100) est un premier stator ; dans laquelle la machine électrique comprend en outre au moins un deuxième stator connecté axialement audit premier stator et pivoté par rapport audit premier stator autour d'un axe géométrique qui s'étend en direction axiale de ladite machine électrique.

9. Procédé d'assemblage d'un stator (100) d'une machine électrique, comprenant les étapes suivantes :
- enroulement (S1) d'une feuille métallique en forme de S autour d'un axe de centre géométrique pour former des tours d'enroulement de feuille métallique (102) agencés circonférentiellement comportant des ouvertures à agencement alterné sur une première portion terminale axiale (210) et une deuxième portion terminale axiale (212) correspondantes ;
- positionnement d'un bloc métallique (104) dans chacune des ouvertures agencées de manière alternée de la première portion terminale axiale (210) des tours d'enroulement de feuille métallique enroulée (102) ;
- positionnement d'un bloc métallique (104) dans chacune des ouvertures agencées de manière alternée de la deuxième portion terminale axiale (212) des tours d'enroulement de feuille métallique enroulée (102) ;
- positionnement des blocs métalliques (104) dans une encoche distribuée circonférentiellement respective d'une portion d'anneau (106) ;
- positionnement de la première portion terminale axiale (210) des tours d'enroulement de feuille métallique enroulée (102) dans une encoche agencée circonférentiellement (204) d'un premier disque terminal (202) ; et
- positionnement de la deuxième portion terminale axiale (212) des tours d'enroulement de feuille métallique enroulée (102) dans une encoche agencée circonférentiellement d'un deuxième disque terminal.

10. Procédé selon la revendication 9, dans lequel l'étape de positionnement du bloc métallique (104) dans chacune des ouvertures agencées de manière alternée de la première portion terminale axiale (210) des tours d'enroulement de feuille métallique enroulée (102) est précédée par l'étape suivante :
- positionnement de la deuxième portion terminale axiale (212) des tours d'enroulement de feuille métallique enroulée (102) dans ladite encoche agencée circonférentiellement du deuxième disque terminal.

11. Procédé selon la revendication 10, dans lequel l'étape de positionnement du bloc métallique (104) dans chacune des ouvertures agencées de manière alternée de la deuxième portion terminale axiale (212) des tours d'enroulement de feuille métallique enroulée (102) est précédée par les étapes suivantes :
- positionnement de la première portion terminale axiale (210) des tours d'enroulement de feuille métallique enroulée (102) dans ladite encoche agencée circonférentiellement (204) du premier disque terminal (202) ; et
- enlèvement dudit deuxième disque terminal de ladite deuxième portion terminale axiale (212) des tours d'enroulement de feuille métallique enroulée (102).
